# EUROPEAN PATENT SPECIFICATION

(11) **EP 4 357 074 B1**
(45) Date of publication and mention of the grant of the patent: **11.11.2026**
(21) Application number: 23163507.9
(22) Date of filing: 22.03.2023
(51) Int. Cl.: B23Q 11/10, A61C 1/05

(54) **SPRAYER FOR SPINDLE, PARTICULARLY FOR A DENTAL MILLING CUTTER**
SPRITZVORRICHTUNG FÜR SPINDEL, INSBESONDERE FÜR EINEN ZAHNFRÄSER
PULVÉRISATEUR POUR BROCHE, EN PARTICULIER POUR FRAISE DENTAIRE

(30) Priority: 18.10.2022 IT 202200021393
(43) Date of publication of application: 24.04.2024
(73) Proprietor: Worldmec S.r.l., 36065 Mussolente, Frazione CASONI (VI) (IT)
(72) Inventor: BERNARDI, Roberto, 36061 Bassano del Grappa (VI) (IT)
(74) Representative: Modiano, Micaela Nadia

(56) References cited:
- EP-A1- 1 640 091
- EP-A1- 2 944 410
- EP-A2- 1 247 495
- WO-A1-2017/009328
- IT-A1- 202000 020 470
- US-A1- 2015 174 721

## Description

The present invention relates to a sprayer for a spindle, particularly for dental milling cutters.

Nowadays for the mechanical working of dental workpieces, machine tools are widely used, such as dental milling cutters, which are provided with an arm at the end of which a tool holder element is provided for supporting a tool.

For stock-removal machining, a spindle tool holder is normally used, which rotates at high speed and on which a milling cutter is fitted.

To reduce friction during rotation, the spindle is usually supported by bearings, within the seat of the spindle, interposed between a fixed part of the apparatus and the spindle itself, around the spindle.

During the machining, it may occur that the removed material, in the form of shavings and dust, negatively affects the milling cutter, not least by becoming attached to it, or penetrate into the bearings, resulting in wear of the milling cutter and of the bearings, thus reducing their operating life or even causing malfunctions and breakage.

To reduce this problem, the use is known of pneumatic blowers and/or suction means for the milling area, which are adapted to remove the machining residues after the material is removed.

Such known techniques, however, do not make it possible to prevent dust or machining residues from being deposited on the spindle or on the bearings, during periods of machine shutdown.

To reduce this problem, US2021/0138599A1 by IVOCLAR VIVADENT is known, which describes the use of a cap for milling machines used for making dental prostheses, for protecting the region where the spindle and its bearings are accommodated.

Such cap has a substantially funnel-shaped contour and is adapted to protect the region where the spindle and bearings are accommodated during the period of machine shutdown and of operation.

Such cap furthermore has a through hole, through which the milling cutter exits and which defines a passage for an air jet, originating from the bearings and directed toward the milling cutter, which is adapted to prevent dust or machining shavings from being able to reach the bearings and compromise their operation.

EP 2 944 410 A1 discloses a sprayer for a spindle tool holder, comprising a substantially funnel-shaped body having, along its axis of extension, a first annular end and a second frustum-shaped end with a smaller diameter than that of said first annular end, at said second end there being an outlet for the exit of said spindle, said sprayer comprising a plurality of passage ducts for a lubricating/cooling fluid within said body, said ducts being inside the material that constitutes the walls of said body and having a course that is at least partially convergent toward said axis of extension.

However, such known art also has a number of drawbacks.

In fact, such known cap, although allowing protection of the region where the spindle and bearings are accommodated from dust or other machining residues, does not allow adequate lubrication and/or cooling of the milling cutter, with the need to lubricate/cool it separately, for example by using a separate nozzle for the production of a water spray, directed onto it.

The aim of the present invention is to provide a sprayer for a spindle that is capable of avoiding the drawbacks of the known art in one or more of the above mentioned aspects.

Within this aim, an object of the invention is to provide a sprayer for a spindle that makes it possible not only to protect the region where the spindle and bearings are accommodated from dust or other machining residues, both during operation and during a machine shutdown, but also to adequately lubricate/cool the milling cutter without needing to resort to separate nozzles or devices.

Another object of the invention is to provide a sprayer for a spindle that makes it possible to reduce the complexity of construction and the overall cost of the machine for the mechanical working in which it is used, with respect to similar, conventional apparatuses.

A further object of the present invention is to overcome the drawbacks of the background art in a manner that is alternative to any existing solutions.

Another object of the invention is to provide a sprayer for a spindle that is highly reliable, easy to implement and of low cost.

This aim and these and other objects which will become better apparent hereinafter are achieved by a sprayer as defined in claim 1.

Further characteristics and advantages of the invention will become better apparent from the detailed description that follows of a preferred, but not exclusive, embodiment of the sprayer for a spindle according to the invention, which is illustrated for the purposes of non-limiting example in the accompanying drawings wherein:
- Figure 1 is an overall perspective view of a sprayer for a spindle, according to the invention, in an application thereof;
- Figure 2 is a cross-sectional view of a portion of the application of Figure 1;
- Figure 3 is a first perspective view of a sprayer for a spindle, according to the invention;

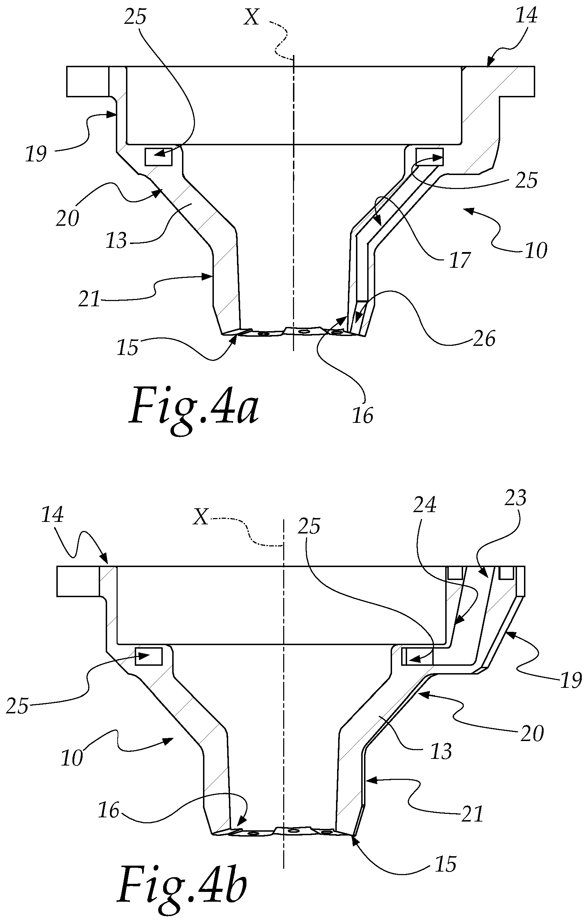

- Figures 4a and 4b are cross-sectional side views of the sprayer for a spindle of Figure 3;

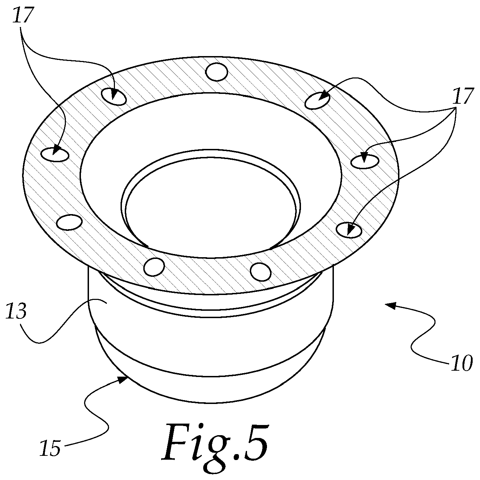

- Figure 5 is an additional cross-sectional view of the sprayer for a spindle of Figure 3.

With reference to the figures, a sprayer for a spindle according to the invention is generally designated by the reference numeral 10.

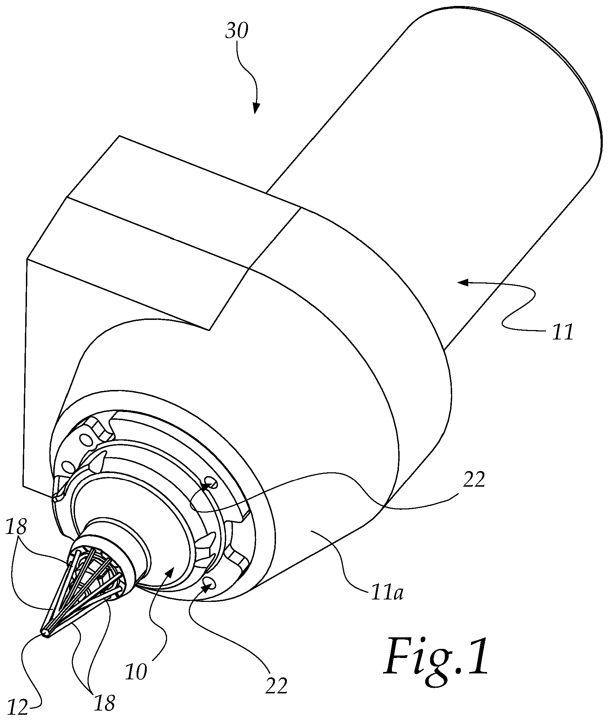

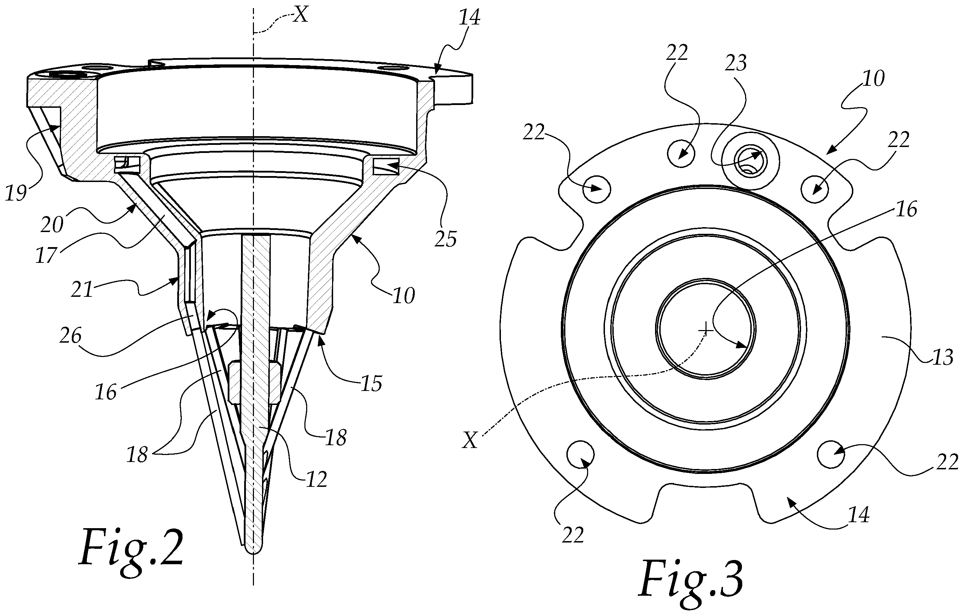

Figures 1 and 2 show the sprayer 10 applied to a spindle tool holder 11 of a dental milling cutter 30, which can also be grasped and moved manually.

A tool 12 is fitted at the end of the spindle 11, in particular a milling cutter.

The sprayer 10 comprises a substantially funnel-shaped body 13 having, along its axis of extension X:
- a first annular end 14,
- a second annular end 15 with a smaller diameter than that of the first annular end 14, at which there is an outlet 16 for the exit of such spindle 11 holding a tool 12 of the machine tool 30.

One of the peculiarities of the invention consists in that the sprayer 10 comprises a plurality of passage ducts 17, 24 for a lubricating/cooling fluid within the body 13; these ducts 17, 24 are inside the material that constitutes the walls of the body 13 and have a course that is at least partially convergent toward the axis of extension X of the sprayer and in particular toward the tip of the tool 12.

Such ducts 17, 24, are adapted to direct corresponding jets 18 of lubricating/cooling fluid onto the tool 12.

Such lubricating/cooling fluid can be:
- in liquid form, for example water,
- and/or in gaseous form, for example compressed air.

It should be noted that, by virtue of the ducts 17, 24, in the sprayer 10 the lubricant/coolant fluid is very close to the tool and closer to the tool than what occurs in similar, conventional caps or sprayers, and this results in a better yield thereof compared to what occurs in conventional ones.

In particular, the body 13 has a contour adapted to match the outline of the spindle 11 and has, starting from the first annular end 14, along its axis of extension X:
- a first portion 19, which is annular,
- a second portion 20, which is frustum-shaped,
- a third portion 21, which is annular and ends with the second annular end 15.

The first annular end 14 is flanged and has a plurality of holes 22 that pass through its thickness, for the insertion of screws, not shown in the figures, for fixing to the spindle 11 or to the dental milling cutter 30.

The fixing of the sprayer 10 to the spindle 11, or to the spindle support 11a, also depends on the elasticity of the material of which it is made, which interferes slightly with this.

Such first annular end 14 also has one or more inlets 23 for one or more first ducts 24, for the inlet of the lubricating/cooling fluid into the sprayer 10.

Such one or more first ducts 24 extend within the body 13 inside the first portion 19, along the direction of extension of the sprayer 10, and lead into an annular manifold 25, which is located at the interface region between the first portion 19 and the second portion 20.

Multiple second ducts 17 extend from the annular manifold 25 and pass through the second portion 20 and the third portion 21, along the direction of extension of the sprayer 10.

In particular, the second ducts 17 have an end portion 26 at the second annular end 15, which is inclined radially toward the axis of extension X of the sprayer 10.

Another peculiarity of the invention consists in that the sprayer 10 is provided monolithically, by 3D printing.

The sprayer 10 is made of plastic material.

Alternatively the sprayer 10 can be made of metallic material, such as for example titanium or chromium steel.

The use of the sprayer 10 according to the invention is the following.

The sprayer 10 is fixed to the spindle 11, or spindle support 11a, or to the dental milling cutter 30.

Such one or more inlets 23 are fluidically connected to the device for pumping the lubricating/cooling fluid.

During the use of the tool machine 30, the device for pumping the lubricating/cooling fluid sends the fluid to the one or more inlets 23 of the sprayer 10.

The fluid enters the one or more first ducts 24 through the one or more inlets 23 and from there reaches the annular manifold 25, then passes through the second ducts 17 and is directed/sprayed onto the tool 12 by way of the inclination of the end portion 26 of said ducts 17.

In practice it has been found that the invention fully achieves the intended aim and objects by providing a sprayer for a spindle that makes it possible not only to protect the region where the spindle and bearings are accommodated from dust or from other machining residues, both during operation and during a machine shutdown, but also to adequately lubricate/cool the milling cutter without needing to resort to separate nozzles or devices.

According to the invention a sprayer for a spindle has been provided that makes it possible to reduce the complexity of construction and the overall cost of the machine for the mechanical working in which it is used, with respect to similar, conventional apparatuses, in that it does not require nozzles or devices separate from the spindle and from the sprayer in order to lubricate/cool the tool.

In practice the materials employed, provided they are compatible with the specific use, and the contingent dimensions and shapes, may be any according to requirements and to the state of the art.

## Claims

1. A sprayer (10) for a spindle tool holder (11), said sprayer (10) comprising a substantially funnel-shaped body (13) having, along its axis of extension (X):
- a first annular end (14),
- a second annular end (15) with a smaller diameter than that of said first annular end (14), at said second annular end (15) there being an outlet (16) for the exit of said spindle (11),
said sprayer (10) further comprising a plurality of passage ducts (17, 24) for a lubricating/cooling fluid within said body (13), said ducts (17, 24) being inside the material that constitutes the walls of said body (13) and having a course that is at least partially convergent toward said axis of extension (X),
wherein said body (13) has a contour adapted to match the outline of said spindle (11) and has, starting from said first annular end (14), along its axis of extension (X):
- a first portion (19), which is annular,
- a second portion (20), which is frustum-shaped,
- a third portion (21), which is annular and ends with said second annular end (15).

2. The sprayer (10) according to claim 1, **characterized in that** said first annular end (14) is flanged and has a plurality of holes (22) that pass through its thickness.

3. The sprayer (10) according to claim 1, **characterized in that** said first annular end (14) has at least one inlet (23) for at least one first duct (24) of said plurality of passage ducts (17, 24).

4. The sprayer (10) according to claim 3, **characterized in that** said at least one first duct (24) extends within said body (13) inside said first portion (19) along the direction of extension of said sprayer (10), said at least one first duct (24) leading into an annular manifold (25) located at the interface region between said first portion (19) and said second portion (20).

5. The sprayer (10) according to one or more of the preceding claims, **characterized in that** multiple second ducts (17) of said plurality of passage ducts (17, 24) extend from said annular manifold (25), said second ducts (17) passing through said second portion (20) and said third portion (21) along the direction of extension of said sprayer (10).

6. The sprayer (10) according to one or more of the preceding claims, **characterized in that** said second ducts (17) have an end portion (26) at said second annular end (15), said end portion (26) being radially inclined toward said axis of extension (X) of said sprayer (10).

7. The sprayer (10) according to one or more of the preceding claims, **characterized in that** it is provided monolithically, by 3D printing.

8. The sprayer (10) according to one or more of the preceding claims, **characterized in that** it is made of plastic material.

9. The sprayer (10) according to one or more of claims 1 to 7, **characterized in that** it is made of metallic material.

## Patentansprüche

1. Eine Spritzvorrichtung (10) für einen Spindelwerkzeughalter (11), wobei die Spritzvorrichtung (10) einen im Wesentlichen trichterförmigen Körper (13) umfasst, welcher entlang seiner Erstreckungsachse (X) Folgendes hat:
- ein erstes ringförmiges Ende (14),
- ein zweites ringförmiges Ende (15) mit einem Durchmesser, der kleiner ist als derjenige des ersten ringförmigen Endes (14), wobei sich an dem zweiten ringförmigen Ende (15) ein Ausgang (16) für den Austritt der Spindel (11) befindet,
wobei die Spritzvorrichtung (10) weiter eine Vielzahl von Durchgangsleitungen (17, 24) für ein Schmier-/Kühlfluid in dem Körper (13) umfasst, wobei die Leitungen (17, 24) sich innerhalb des Materials befinden, das die Wände des Körpers (13) bildet, und einen Verlauf haben, der zumindest teilweise zu der Erstreckungsachse (X) hin konvergiert;
wobei der Körper (13) eine Kontur hat, die ausgebildet ist, um zum Umriss der Spindel (11) zu passen, und, ausgehend von dem ersten ringförmigen Ende (14), entlang seiner Erstreckungsachse (X), Folgendes hat:
- einen ersten Abschnitt (19), der ringförmig ist,
- einen zweiten Abschnitt (20), der stumpfförmig ist,
- einen dritten Abschnitt (21), der ringförmig ist und mit dem zweiten ringförmigen Ende (15) abschließt.

2. Die Spritzvorrichtung (10) gemäß Anspruch 1, **dadurch gekennzeichnet, dass** das erste ringförmige Ende (14) einen Flansch und eine Vielzahl von Löchern (22) hat, die durch seine Dicke verlaufen.

3. Die Spritzvorrichtung (10) gemäß Anspruch 1, **dadurch gekennzeichnet, dass** das erste ringförmige Ende (14) mindestens einen Eingang (23) für mindestens eine erste Leitung (24) der Vielzahl von Durchgangsleitungen (17, 24) hat.

4. Die Spritzvorrichtung (10) gemäß Anspruch 3, **dadurch gekennzeichnet, dass** die mindestens eine erste Leitung (24) sich innerhalb des Körpers (13) in dem ersten Abschnitt (19) entlang der Erstreckungsrichtung der Spritzvorrichtung (10) erstreckt; wobei die mindestens eine erste Leitung (24) in einen ringförmigen Verteiler (25) führt, der sich im Schnittstellenbereich zwischen dem ersten Abschnitt (19) und dem zweiten Abschnitt (20) befindet.

5. Die Spritzvorrichtung (10) gemäß einem oder mehreren der obigen Ansprüche, **dadurch gekennzeichnet, dass** sich mehrere zweite Leitungen (17) der Vielzahl von Durchgangsleitungen (17, 24) von dem ringförmigen Verteiler (25) erstrecken, wobei die zweiten Leitungen (17) durch den zweiten Abschnitt (20) und den dritten Abschnitt (21) entlang der Erstreckungsrichtung der Spritzvorrichtung (10) verlaufen.

6. Die Spritzvorrichtung (10) gemäß einem oder mehreren der obigen Ansprüche, **dadurch gekennzeichnet, dass** die zweiten Leitungen (17) an dem zweiten ringförmigen Ende (15) einen Endabschnitt (26) haben, wobei der Endabschnitt (26) radial zu der Erstreckungsachse (X) der Spritzvorrichtung (10) hin geneigt ist.

7. Die Spritzvorrichtung (10) gemäß einem oder mehreren der obigen Ansprüche, **dadurch gekennzeichnet, dass** sie monolithisch durch 3D-Druck hergestellt wird.

8. Die Spritzvorrichtung (10) gemäß einem oder mehreren der obigen Ansprüche, **dadurch gekennzeichnet, dass** sie aus Kunststoffmaterial besteht.

9. Die Spritzvorrichtung (10) gemäß einem oder mehreren der Ansprüche 1 bis 7, **dadurch gekennzeichnet, dass** sie aus metallischem Material besteht.

## Revendications

1. Pulvérisateur (10) destiné à un porte-outil à broche (11), ledit pulvérisateur (10) comprenant un corps (13) sensiblement en forme d'entonnoir présentant, le long de son axe d'extension (X) :
- une première extrémité annulaire (14),
- une deuxième extrémité annulaire (15) de diamètre inférieur à celui de ladite première extrémité annulaire (14), à ladite deuxième extrémité annulaire (15) étant prévue une sortie (16) destinée à la sortie de ladite broche (11),
ledit pulvérisateur (10) comprenant en outre une pluralité de canaux de passage (17, 24) destinés à un fluide de lubrification/refroidissement à l'intérieur dudit corps (13), lesdits canaux (17, 24) étant situés à l'intérieur du matériau constituant les parois dudit corps (13) et présentant un tracé au moins partiellement convergent vers ledit axe d'extension (X),
où ledit corps (13) présente un contour adapté pour épouser le profil de ladite broche (11) et comporte, à partir de ladite première extrémité annulaire (14), le long de son axe d'extension (X) :
- une première partie (19), qui est annulaire,
- une deuxième partie (20), qui est en forme de tronc de cône,
- une troisième partie (21), qui est annulaire et se termine par ladite deuxième extrémité annulaire (15).

2. Pulvérisateur (10) selon la revendication 1, **caractérisé en ce que** ladite première extrémité annulaire (14) est à bride et comporte une pluralité de trous (22) qui la traversent sur toute son épaisseur.

3. Pulvérisateur (10) selon la revendication 1, **caractérisé en ce que** ladite première extrémité annulaire (14) comporte au moins une entrée (23) pour au moins un premier canal (24) parmi ladite pluralité de canaux de passage (17, 24).

4. Pulvérisateur (10) selon la revendication 3, **caractérisé en ce que** ledit au moins un premier canal (24) s'étend à l'intérieur dudit corps (13), à l'intérieur de ladite première partie (19), le long de la direction d'extension dudit pulvérisateur (10), ledit au moins un premier canal (24) débouchant dans un collecteur annulaire (25) situé au niveau de la zone d'interface entre ladite première partie (19) et ladite deuxième partie (20).

5. Le pulvérisateur (10) selon une ou plusieurs des revendications précédentes, **caractérisé en ce que** plusieurs seconds canaux (17) de ladite pluralité de canaux de passage (17, 24) s'étendent à partir dudit collecteur annulaire (25), lesdits seconds canaux (17) traversant ladite seconde partie (20) et ladite troisième partie (21) dans la direction d'extension dudit pulvérisateur (10).

6. Le pulvérisateur (10) selon une ou plusieurs des revendications précédentes, **caractérisé en ce que** lesdits seconds canaux (17) comportent une partie d'extrémité (26) au niveau de ladite seconde extrémité annulaire (15), ladite partie d'extrémité (26) étant inclinée radialement vers ledit axe d'extension (X) dudit pulvérisateur (10).

7. Pulvérisateur (10) selon une ou plusieurs des revendications précédentes, **caractérisé en ce qu'**il est réalisé de manière monolithique, par impression 3D.

8. Pulvérisateur (10) selon une ou plusieurs des revendications précédentes, **caractérisé en ce qu'**il est constitué d'une matière plastique.

9. Pulvérisateur (10) selon une ou plusieurs des revendications 1 à 7, **caractérisé en ce qu'**il est réalisé en matériau métallique.
